# FASCICULE DE BREVET EUROPEEN

(11) **EP 2 750 961 B1**
(45) Date de publication et mention de la délivrance du brevet: **06.07.2016**
(21) Numéro de dépôt: 12743756.4
(22) Date de dépôt: 23.07.2012
(51) Int. Cl.: B62D 15/02, G01C 21/36, G08G 1/0968, G08G 1/16

(54) **DISPOSITIF POUR ESTIMER UNE TRAJECTOIRE FUTURE D'UN VÉHICULE ET ASSOCIER À DES PARTIES QU'ELLE COMPREND DES ASPECTS DIFFÉRENTS SELON LEURS POSITIONS PAR RAPPORT À UN OBSTACLE, POUR UN SYSTÈME D'AIDE À LA CONDUITE**
VORRICHTUNG ZUR SCHÄTZUNG DES ZUKÜNFTIGEN WEGS EINES FAHRZEUGS UND ZUR ZUORDNUNG VON TEILEN MIT UNTERSCHIEDLICHEN POSITIONEN IN BEZUG AUF EIN HINDERNIS FÜR EIN FAHRHILFESYSTEM
DEVICE FOR ESTIMATING A FUTURE PATH OF A VEHICLE AND ASSOCIATING WITH PARTS THAT IT COMPRISES ASPECTS THAT DIFFER ACCORDING TO THEIR POSITIONS IN RELATION TO AN OBSTACLE, FOR A DRIVE-ASSIST SYSTEM

(30) Priorité: 31.08.2011 FR 1157698
(43) Date de publication de la demande: 09.07.2014
(73) Titulaire: Peugeot Citroën Automobiles SA, 78140 Vélizy Villacoublay (FR)
(72) Inventeur: LARGE, Frederic, F-78180 Montigny Le Bretonneux (FR)
(86) Numéro de dépôt international: PCT/FR2012/051750
(87) Numéro de publication internationale: WO 2013/030480

(56) Documents cités:
- WO-A1-2010/114747
- WO-A1-2011/089812
- JP-A- 11 023 305
- US-A1- 2010 256 900

## Description

L'invention concerne les véhicules, éventuellement de type automobile, et plus précisément les systèmes embarqués qui permettent d'aider au moins visuellement les conducteurs à conduire leurs véhicules.

Certains véhicules, notamment de type automobile, sont équipés (de façon permanente ou temporaire) d'un système d'aide à la conduite qui est agencé pour construire une représentation d'une image de synthèse dans au moins une vue choisie d'une partie au moins d'une zone choisie entourant son véhicule, et pour afficher une partie au moins de cette représentation.

On notera que l'aide à la conduite peut inclure l'aide aux manoeuvres et l'aide au stationnement.

Chaque représentation est construite à partir de groupe(s) de données d'image qui sont représentatifs d'images intermédiaires acquises par un moyen d'acquisition (généralement une caméra) dans une zone d'acquisition qui entoure partiellement le véhicule et qui constitue une partie de la zone choisie. Cela permet à un conducteur d'observer l'environnement proche de son véhicule dans au moins une vue choisie, éventuellement après traitement(s).

Afin de faciliter la compréhension de l'image de synthèse affichée, certains systèmes d'aide comprennent un dispositif de traitement qui est agencé pour déterminer une trajectoire future de son véhicule au sein de la représentation en fonction au moins de l'angle de braquage et de la vitesse en cours du véhicule. Cette trajectoire future est alors affichée sur la partie de la représentation de la zone choisie affichée, généralement par superposition, avec une représentation d'obstacle(s) détecté(s) dans l'environnement observable du véhicule ainsi qu'éventuellement avec une représentation schématique (ou gabarit) du véhicule.

Un inconvénient de ce mode d'affichage réside dans le fait que la longueur des lignes qui matérialisent la trajectoire future est indépendante de la scène affichée et donc le conducteur a l'impression que la trajectoire future de son véhicule passe au travers de l'obstacle détecté (et affiché), ce qui peut constituer une gêne.

Afin d'améliorer la situation, il est connu notamment du document WO2010114747, d'arrêter la trajectoire future au niveau du premier obstacle détecté. Le conducteur n'a donc plus l'impression que son véhicule va passer au travers de l'obstacle. Mais trois nouveaux problèmes apparaissent. En effet, si les position et cartographie de l'obstacle détecté ne sont pas suffisamment précises, il peut survenir au niveau de l'affichage des changements brusques de la longueur de la trajectoire future lorsque le véhicule se rapproche de cet obstacle, ce qui peut gêner le conducteur. De plus, la trajectoire future étant brusquement arrêtée au niveau de l'obstacle détecté, lorsque ce dernier est très proche du véhicule et que ce véhicule est dans une phase de braquage, le conducteur ne dispose plus de l'information sur le braquage en cours. Enfin, le conducteur ne dispose plus d'indication sur la trajectoire future au-delà de l'obstacle, ce qui peut s'avérer gênant dans certains cas, et notamment lorsque l'obstacle détecté n'est que de la végétation peu haute qui ne lui fait courir aucun risque.

L'invention a donc pour but d'améliorer la situation.

Elle propose notamment à cet effet un dispositif de traitement conforme à l'objet de la revendication 1 ; l'enseignement du document WO2010114747 étant contenu dans le préambule de la revendication 1.

On entend ici par « vue choisie » une vue sous un angle particulier, comme par exemple une vue du dessus ou une vue avant ou une vue arrière ou encore une vue de trois-quarts avant ou arrière. Par ailleurs, on entend ici par « zone choisie » tout ou partie de la zone qui entoure complètement un véhicule.

Ce dispositif de traitement se caractérise par le fait que ses moyens de traitement sont en outre agencés, lorsque la trajectoire future est intersectée par un obstacle, pour décomposer cette trajectoire future en une première partie contenant cet obstacle, une deuxième partie située entre le véhicule et la première partie, et une troisième partie située après la première partie, et pour associer des premier et deuxième aspects respectivement aux deuxième et troisième parties de la trajectoire future, de sorte que ces deuxième et troisième parties de la trajectoire future soient affichées respectivement avec leurs premier et deuxième aspects associés.

Grâce à l'invention, le conducteur peut différencier instantanément les portions de la trajectoire future qui sont situées en amont et en aval d'un obstacle détecté, et donc n'est pas perturbé lorsque la trajectoire future affichée traverse un obstacle. Par ailleurs, l'invention permet une interprétation plus intuitive des images affichées et une réduction de la charge mentale du conducteur.

Le dispositif de traitement selon l'invention peut comporter d'autres caractéristiques qui peuvent être prises séparément ou en combinaison, et notamment :
- ses moyens de traitement peuvent être agencés pour associer un troisième aspect à la première partie de la trajectoire future, de sorte que cette première partie de la trajectoire future soit affichée avec ce troisième aspect associé ;
- le premier aspect peut consister en un tracé continu et opaque de la deuxième partie de la trajectoire future, et le deuxième aspect peut consister en un tracé continu et semi-transparent de la troisième partie de la trajectoire future ;
   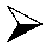 le troisième aspect peut consister en un tracé de transition allant progressivement de continu et opaque à continu et semi-transparent ;
- dans une première variante de réalisation, le premier aspect peut consister en un tracé continu et opaque de la deuxième partie de la trajectoire future, et le troisième aspect peut consister en un tracé discontinu et semi-transparent de la troisième partie de la trajectoire future ;
   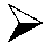 le troisième aspect peut consister en un tracé de transition allant progressivement de continu et opaque à discontinu et semi-transparent ;
- dans une seconde variante de réalisation, le premier aspect peut consister en un tracé continu et semi-transparent de la deuxième partie de la trajectoire future, et le deuxième aspect peut consister en un tracé discontinu de la troisième partie de la trajectoire future ;
   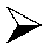 le deuxième aspect peut consister en un tracé discontinu et semi-transparent de la troisième partie de la trajectoire future ;
   - le troisième aspect peut consister en un tracé de transition allant progressivement de continu et semi-transparent à discontinu et semi-transparent ;
- ses moyens de traitement peuvent être agencés pour calculer une extension de la première partie de la trajectoire future en fonction au moins de la précision de la détermination de la position de l'obstacle par rapport au véhicule.

L'invention propose également un système d'aide, destiné à aider un conducteur de véhicule, agencé, d'une part, pour construire une représentation d'une image de synthèse dans au moins une vue choisie d'une partie au moins d'une zone choisie entourant ce véhicule, et, d'autre part, pour afficher une partie au moins de cette représentation, et comprenant un dispositif de traitement du type de celui présenté ci-avant.

L'invention propose également un véhicule, éventuellement de type automobile, et comprenant un système d'aide du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement, dans une vue du dessus, un exemple de véhicule automobile équipé d'un système d'aide comprenant un dispositif de traitement selon l'invention,
- la figure 2 illustre schématiquement un premier exemple d'affichage d'une partie d'une trajectoire future en présence d'un obstacle,
- la figure 3 illustre schématiquement un deuxième exemple d'affichage d'une partie d'une trajectoire future en présence d'un obstacle,
- la figure 4 illustre schématiquement un troisième exemple d'affichage d'une partie d'une trajectoire future en présence d'un obstacle,
- la figure 5 illustre schématiquement une image de synthèse dans une vue du dessus d'une zone choisie qui entoure, ici, intégralement un véhicule, avec superposition d'un obstacle et d'une première trajectoire future,
- la figure 6 illustre schématiquement une image de synthèse d'une partie avant de la zone choisie de la figure 5 avec superposition de l'obstacle et de la première trajectoire future,
- la figure 7 illustre schématiquement une variante de l'image de synthèse de la figure 6 dans laquelle l'obstacle est matérialisé par un trait au niveau du cadre,
- la figure 8 illustre schématiquement une image de synthèse dans une vue du dessus d'une zone choisie qui entoure, ici, intégralement un véhicule, avec superposition d'un obstacle et d'une seconde trajectoire future,
- la figure 9 illustre schématiquement une image de synthèse d'une partie avant de la zone choisie de la figure 8 avec superposition de l'obstacle et de la seconde trajectoire future, et
- la figure 10 illustre schématiquement une variante de l'image de synthèse de la figure 9 dans laquelle l'obstacle est matérialisé par un trait au niveau du cadre.

Les dessins annexés pourront non seulement servir à compléter l'invention, mais aussi contribuer à sa définition, le cas échéant.

L'invention a pour but d'offrir un dispositif de traitement D destiné à être associé à un système d'aide SA, lui-même destiné à aider au moins visuellement un conducteur à conduire son véhicule V.

Dans ce qui suit, on considère, à titre d'exemple non limitatif, que le véhicule V est de type automobile. Il s'agit par exemple d'une voiture, d'un autocar, d'un camion ou d'un véhicule utilitaire. Mais, l'invention n'est pas limitée à ce type de véhicule. Elle concerne en effet tout type de véhicule terrestre ou maritime (ou fluvial) ou encore aérien (comme par exemple un drone - construction d'une vue d'une zone choisie d'une zone géographique donnée, en vue d'en prendre une photo complète) pouvant effectuer des déplacements et des manoeuvres sur le sol ou sur l'eau ou sous l'eau ou encore dans les airs.

Il est important de noter que lorsque le véhicule V évolue dans un espace tridimensionnel (3D) comme l'air ou l'eau la représentation de sa trajectoire peut se faire soit dans un espace tridimensionnel (3D), soit dans un espace bidimensionnel (2D). Dans ce dernier cas, la trajectoire affichée (T) est la projection dans un plan choisi (par exemple horizontal) de la trajectoire 3D estimée.

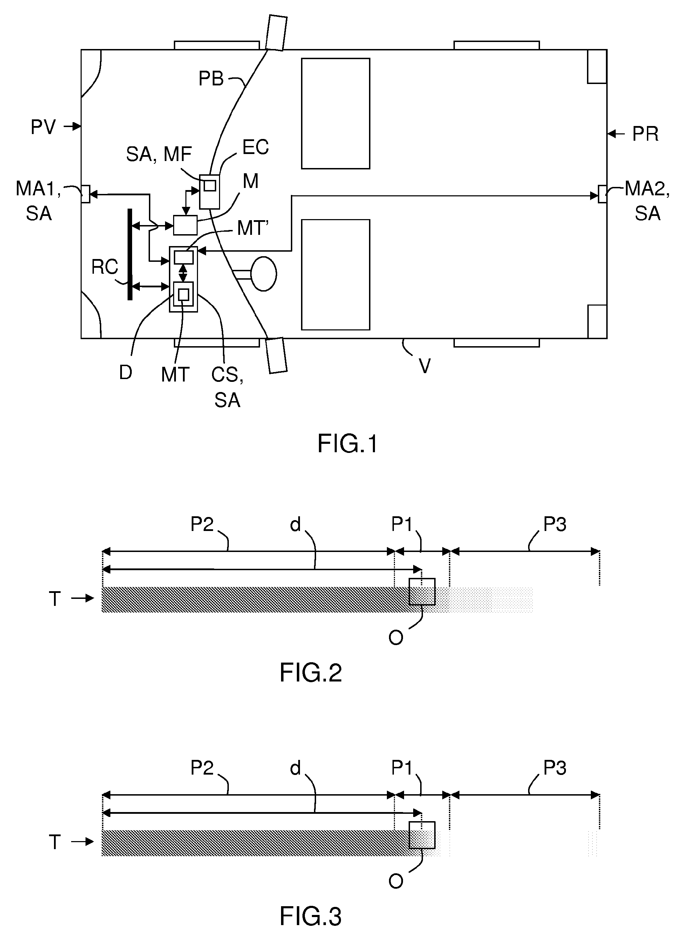

On a schématiquement et fonctionnellement représenté sur la figure 1 un véhicule automobile de type voiture V, équipé d'un exemple de réalisation d'un système d'aide SA selon l'invention.

Cette voiture V comprend classiquement une partie avant PV et une partie arrière PR opposée à la partie avant PV, une planche de bord PB, ici équipée d'un écran EC (en position centrale), un réseau de communication (ou réseau de bord) RC, éventuellement de type multiplexé, un module (ou boîtier) télématique MD, couplé à l'écran EC et au réseau de communication RC. Bien que cela ne soit pas représenté sur la figure 1, un véhicule V comprend généralement, d'une part, un ordinateur de bord couplé au réseau de communication RC afin de fournir des informations destinées notamment à être affichées sur l'écran EC sous le contrôle du module (ou boîtier) télématique MD, et, d'autre part, des capteurs et des calculateurs généralement couplés au réseau de communication RC, ainsi qu'éventuellement entre eux, afin de mettre à disposition des valeurs de paramètres ou d'états mesurées ou estimées et des résultats de calculs.

Le module (ou boîtier) télématique MD est principalement chargé de contrôler l'affichage d'informations et d'images, relatives au fonctionnement du véhicule V ou à des résultats délivrés par des applications embarquées, sur l'écran EC. On notera que ce module (ou boîtier) télématique MD peut éventuellement faire partie de l'écran EC.

Comme illustré sur la figure 1, un système d'aide SA, selon l'invention, comprend au moins un moyen d'acquisition MAi, des moyens de traitement MT', des moyens d'affichage MF, et un dispositif de traitement D.

Chaque moyen d'acquisition MAi est agencé de manière à acquérir et transmettre des groupes de données d'image qui sont représentatifs d'images intermédiaires acquises à des instants successifs dans une zone d'acquisition qui entoure partiellement le véhicule V et qui constitue une partie d'une zone choisie ZE.

On entend ici par « zone choisie » tout ou partie d'une zone qui entoure complètement un véhicule.

Chaque moyen d'acquisition MAi est installé dans le véhicule V, de façon permanente ou temporaire, en au moins un endroit approprié.

De préférence, un moyen d'acquisition MAi comprend au moins une caméra d'observation qui est installée, définitivement ou temporairement, dans une position qui lui permet d'observer une partie au moins de l'environnement immédiat du véhicule V, et en particulier une zone d'acquisition qui est située devant son pare-choc avant ou derrière son pare-choc arrière. Chaque caméra (d'observation) MAi fournit des images réelles.

Dans l'exemple non limitatif illustré sur la figure 1, le véhicule V comprend deux moyens d'acquisition MAi comprenant respectivement deux caméras d'observation MA1 (i = 1) et MA2 (i = 2) implantées en position centrale respectivement à l'avant et à l'arrière (par exemple dans les pare-chocs ou boucliers).

On notera que le véhicule V pourrait être également équipé de moyens d'acquisition complémentaires, comme par exemple des moyens d'analyse par voie d'ondes, tels que des détecteurs radar, implantés à l'avant et/ou à l'arrière du véhicule V (par exemple dans les pare-chocs ou boucliers) dans des positions qui leur permettent de détecter des obstacles dans leur environnement immédiat. Il est rappelé que les moyens d'analyse par voie d'ondes fournissent des données d'inspection à partir desquelles on peut générer une cartographie 2D, 2,5D ou 3D de l'environnement immédiat extérieur au véhicule V. Ces moyens d'analyse par voie d'ondes sont généralement bien adaptés à la détection d'obstacles, y compris en mouvement relatif par rapport au véhicule V. Les informations obtenues par l'analyse peuvent être représentatives soit d'une distance, et dans ce cas la connaissance du déplacement du véhicule V permet de déduire la vitesse relative des obstacles détectés par rapport au véhicule V, soit directement de la vitesse relative de l'obstacle détecté par rapport au véhicule V.

On notera également que l'un au moins des moyens d'acquisition MAi peut être éventuellement un équipement qui assure au moins une autre fonction au sein du véhicule V.

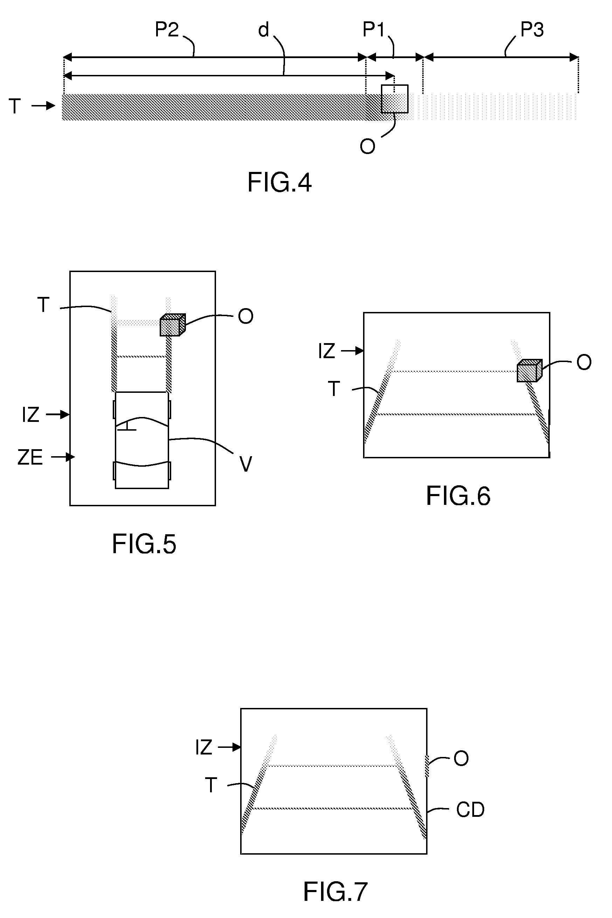

Comme illustré schématiquement et non limitativement sur les figures 5 à 10, les moyens de traitement MT' sont agencés (ou conçus) pour construire une représentation d'une image de synthèse IZ dans une vue choisie de la zone choisie ZE à partir de groupe(s) de données d'image qui sont fournis par les moyens d'acquisition MAi et des valeurs d'au moins un paramètre du véhicule V (comme par exemple sa vitesse en cours), qui transitent dans le réseau de communication RC.

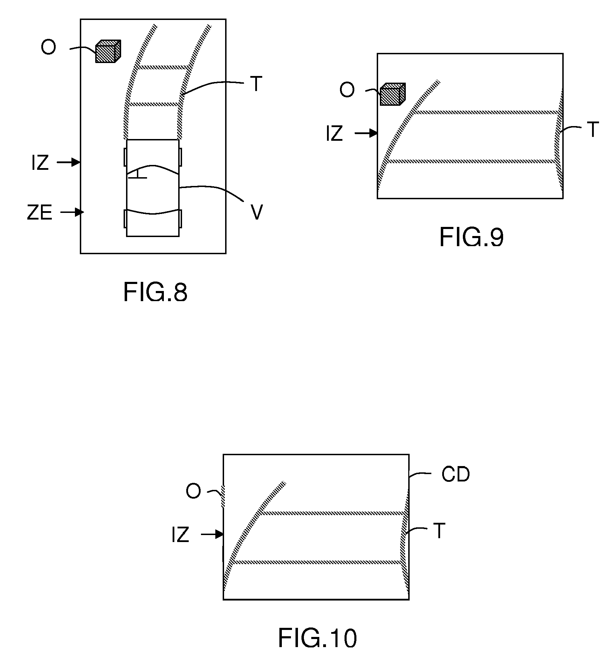

On entend ici par « vue choisie » une vue sous un angle particulier, comme par exemple une vue du dessus (voir figures 5 et 8), ou une vue avant (voir figures 6, 7, 9 et 10), ou une vue arrière, ou encore une vue de trois-quarts avant ou arrière.

On notera que les moyens de traitement MT' peuvent construire des représentations d'images de synthèse IZ dans le cadre d'une application d'aide à la conduite qui peut éventuellement inclure l'aide aux manoeuvres et/ou l'aide au stationnement. Parmi ces aides au conducteur, on peut notamment citer, en complément de la détection d'objets susceptibles de constituer des obstacles, la détection de franchissement de lignes, la correction de trajectoire, l'adaptation de la vitesse du véhicule en fonction de la distance qui le sépare d'un véhicule qui le précède, la détection de place de stationnement adaptée à un véhicule, l'assistance lors d'une manoeuvre dans un passage délicat, ou l'assistance pendant une manoeuvre de stationnement. Pour ces fonctions d'aide les informations fournies par l'invention pourront par exemple se traduire par une adaptation d'un aspect fonctionnel résultant d'une prise en compte anticipée d'obstacles potentiels futurs. Cela pourra être notamment et non limitativement le cas pour les points de franchissement estimés lors d'alertes de franchissement involontaire de ligne, ou pour les points de collision estimés lors d'alertes d'obstacle approchant à une intersection.

L'image de synthèse IZ peut n'être que partiellement représentative des images acquises par les caméras lorsque des traitements additionnels ont été effectuées. Mais elle peut être également représentative intégralement des images acquises par les caméras en cas de traitements effectués. Par conséquent, une image de synthèse peut comporter des informations présentant une relation directe ou indirecte avec les images acquises par les caméras, comme on le verra plus loin.

On notera que l'image de synthèse IZ de la zone choisie ZE peut inclure une représentation schématique (ou gabarit) du véhicule V (au moins partielle), comme illustré non limitativement sur les figures 5 et 8 (vue du dessus).

On notera également que l'image de synthèse IZ de la zone choisie ZE peut être éventuellement construite progressivement par les moyens de traitement MT' à partir de groupes de données d'image successifs. Pour ce faire, ils (MT') peuvent, par exemple, mettre en oeuvre une technique dite « à historique d'images » du type de celle qui est décrite dans la partie de description détaillée du document brevet FR 09 53271. Cette technique consiste, de façon simplifiée, à recaler les images intermédiaires (représentées respectivement par les groupes de données d'image obtenus) les unes par rapport aux autres en fonction d'informations (par exemple des « tops de passage de roues »), qui sont associées respectivement à ces groupes de données d'image et représentatives de déplacements effectués par le véhicule V entre ces différentes images intermédiaires, afin de constituer progressivement l'image de synthèse IZ de la zone choisie ZE dans une vue choisie (illustrée sur les figures 5 et 8 (ici une vue du dessus)). On notera également qu'il est avantageux, pour une question de taille de mémoire, de ne stocker temporairement, jusqu'à la réception du prochain groupe de données d'image, que l'image de synthèse IZ qui est en cours de construction, dans la vue choisie, puis de recaler le prochain groupe de données fourni par les moyens d'acquisition MAi par rapport aux données stockées de l'image de synthèse IZ en cours de construction. Ce stockage se fait alors dans des moyens de stockage, comme par exemple une mémoire, qui font de préférence partie des moyens de traitement MT'.

Dans l'exemple non limitatif illustré sur les figures 5 à 10, on n'utilise de façon simplifiée que la caméra avant MA1 du véhicule V pour constituer (éventuellement progressivement) l'image de synthèse IZ de la zone choisie ZE car le véhicule V circule en marche avant. On notera que sur les figures 5 et 8, l'image de synthèse IZ affichée est représentative de l'intégralité de la zone choisie ZE (dans une vue du dessus), alors que sur les figures 6, 7, 9 et 10, l'image de synthèse IZ affichée est représentative d'une partie avant seulement de la zone choisie ZE (dans une vue avant). Cette caméra avant MA1 acquiert périodiquement une image réelle d'une zone d'acquisition située devant le véhicule V, et les données d'image définissant chaque image sont transmises aux moyens de traitement MT' afin de pouvoir être (éventuellement recalées les unes par rapport aux autres, de préférence au fur et à mesure de leur acquisition).

On notera que les moyens de traitement MT' peuvent utiliser toute autre technique de recalage connue de l'homme de l'art, et notamment la technique dite de « génération de mosaïques » (ou en anglais « mosaicing ») et la technique dite de « structure à partir du mouvement » (ou en anglais « structure from motion »), qui sont connues en robotique mobile notamment.

Les moyens de traitement MT' peuvent être réalisés sous la forme de modules logiciels (ou informatiques), ou bien de circuits électroniques, ou encore d'une combinaison de circuits électroniques et de modules logiciels.

Par ailleurs, les moyens de traitement MT' peuvent faire partie d'un calculateur dédié CS (comme illustré non limitativement sur la figure 1) ou bien du module télématique MD.

Chaque image de synthèse finale IZ (avec ou sans traitement(s) additionnel(s)), construite par les moyens de traitement MT', est fournie aux moyens d'affichage MF, éventuellement via le réseau de communication RC et le module télématique MD.

Ces moyens d'affichage MF sont agencés pour transformer chaque représentation d'une image de synthèse IZ en une image affichable et pour afficher une partie au moins de cette dernière avec des informations complémentaires, notamment représentatives d'une trajectoire future T déterminée par le dispositif de traitement D selon l'invention (décrit plus loin).

Par conséquent, les moyens d'affichage MF comprennent au moins un écran d'affichage EC et un module applicatif d'interface chargé de transformer chaque représentation d'image de synthèse IZ et les informations complémentaires associées en une image affichable par l'écran d'affichage EC associé. Ce module applicatif d'interface peut être réalisé sous la forme de modules logiciels (ou informatiques), ou bien de circuits électroniques, ou encore d'une combinaison de circuits électroniques et de modules logiciels.

Un dispositif de traitement D, selon l'invention, peut faire partie du calculateur dédié CS (comme illustré non limitativement sur la figure 1) ou bien du module télématique MD lorsque ce dernier (MD) comprend les moyens de traitement MT'.

Un tel dispositif de traitement D comprend principalement des moyens de traitement MT qui sont tout d'abord agencés pour déterminer une trajectoire future T (instantanée) du véhicule V au sein de la représentation de l'image de synthèse IZ, en fonction au moins de l'angle de braquage et de la vitesse en cours du véhicule V (qui transitent dans le réseau de communication RC).

La trajectoire future T du véhicule V peut, par exemple, être estimée à partir de l'angle de braquage du véhicule, de la distance entre les essieux du véhicule, de la largeur de ces essieux, de la vitesse en cours du véhicule V et d'un modèle cinématique, comme par exemple celui dit « de la bicyclette » (qui est bien connu de l'homme de l'art). Cette trajectoire future T (instantanée) peut être également obtenue à partir d'informations qui sont fournies par une centrale inertielle et/ou par l'estimation d'un flot optique issu d'une ou plusieurs caméras.

Une fois que les moyens de traitement MT du dispositif de traitement D ont déterminé une trajectoire future T, ils déterminent si cette trajectoire future T est intersectée par un obstacle O.

On notera que les obstacles O sont détectés par les moyens de traitement MT' du système d'aide SA, par exemple par reconnaissance de forme et/ou analyse par voie d'ondes. De même, les positions des obstacles O par rapport au référentiel de la représentation de l'image de synthèse IZ de la zone choisie ZE, et les éventuelles vitesses de ces obstacles O sont estimées par les moyens de traitement MT' du système d'aide SA et fournies aux moyens de traitement MT du dispositif de traitement D.

La recherche d'une éventuelle intersection peut éventuellement prendre en compte le déplacement relatif d'un obstacle O par rapport au véhicule V, et donc la vitesse relative (en tant que vecteur) de l'obstacle O par rapport au véhicule V.

Chaque fois que les moyens de traitement MT ont déterminé qu'un obstacle détecté O intersecte la trajectoire future T, ils commencent par décomposer cette dernière (T) en une première partie P1 qui contient cet obstacle O, une deuxième partie P2 qui est située entre le véhicule V et la première partie P1, et une troisième partie P3 qui est située après la première partie P1.

On comprendra que la position relative de la première partie P1 varie au cours du temps et d'une situation à une autre du fait qu'elle contient l'obstacle détecté O.

L'extension de cette première partie P1 peut être prédéfinie ou bien elle peut être déterminée en fonction au moins de la précision de la position de l'obstacle O par rapport au véhicule V. Dans ce dernier cas, cette extension peut varier au cours du temps. En effet, elle peut dépendre non seulement de la distance d entre l'obstacle O et le véhicule V (voir figures 2 à 4), mais également de l'éventuelle vitesse relative de l'obstacle O par rapport au véhicule V. Or, la précision de l'estimation de la distance d n'est généralement valable que dans une plage de distance prédéfinie et la précision de l'estimation de la vitesse relative de l'obstacle O par rapport au véhicule V n'est généralement valable que dans une plage de vitesse relative qui varie généralement en fonction, au moins, de la distance d, et éventuellement de l'alignement entre l'obstacle détecté O et l'axe du capteur utilisé (les imprécisions dues aux capteurs et aux traitements ne sont généralement pas identiques longitudinalement et transversalement).

On comprendra que les deuxième P2 et troisième P3 parties d'une trajectoire future T sont respectivement placées en amont et en aval de l'obstacle O par rapport au sens allant du véhicule V vers l'obstacle O. Par ailleurs, on comprendra que les extensions respectives de ces deuxième P2 et troisième P3 parties varient au cours du temps et d'une situation à une autre, en fonction notamment des position et extension de la première partie P1.

Une fois que les moyens de traitement MT ont effectué la décomposition précitée, ils associent des premier et deuxième aspects (ou rendus) respectivement aux deuxième P2 et troisième P3 parties de la trajectoire future T.

On notera que la longueur de la trajectoire future T estimée peut être soit une valeur arbitraire moyenne, éventuellement représentative du contexte du véhicule V (et donc de l'éventuelle manoeuvre dont il fait l'objet), soit une valeur qui est calculée sur la base de valeurs en cours de paramètre(s) du véhicule V, comme par exemple sa vitesse et/ou la distance d le séparant d'un obstacle).

Une fois que les moyens de traitement MT du dispositif de traitement D ont déterminé une trajectoire future T et associé au moins à ses deuxième P2 et troisième P3 parties respectivement des premier et deuxième aspects (ou rendus), ils fournissent aux moyens d'affichage MF, éventuellement via le réseau de communication RC et le module télématique MD, les données qui les définissent, et notamment celles qui définissent les première P1, deuxième P2 et troisième P3 parties, et qui constituent les informations complémentaires mentionnées plus haut, afin que cette trajectoire future T soit affichée par ces moyens d'affichage MF sur l'écran EC, en même temps que la partie au moins de la représentation de l'image de synthèse IZ de la zone choisie ZE, avec au moins les premier et deuxième aspects associés respectivement à ses deuxième P2 et troisième P3 parties, et avec chaque obstacle O détecté (lorsque c'est possible).

On notera que les moyens de traitement MT peuvent être éventuellement et avantageusement agencés, en outre, pour associer un troisième aspect (ou rendu) à la première partie P1 de la trajectoire future T, afin que cette première partie P1 de la trajectoire future T soit affichée avec ce troisième aspect associé. Dans ce cas, les moyens de traitement MT fournissent également aux moyens d'affichage MF, éventuellement via le réseau de communication RC et le module télématique MD, les données qui définissent le troisième aspect (et qui constituent des informations complémentaires mentionnées plus haut) afin que la première partie P1 de cette trajectoire future T soit également affichée par ces moyens d'affichage MF sur l'écran EC, avec son troisième aspect associé.

On notera également qu'un obstacle O détecté peut être matérialisé sur une image affichée par un parallélogramme ou parallélépipède (comme dans le cas des exemples des figures 5, 6, 8 et 9) ou une barre située sur un côté au moins du cadre CD qui entoure l'image affichée (comme dans le cas des exemples des figures 7 et 10).

Les premier, deuxième et éventuels troisième aspects (ou rendus) peuvent être choisis parmi différents types de tracé, et notamment parmi un tracé continu et opaque, un tracé continu et semi-transparent, un tracé discontinu et semi-transparent, et un tracé de transition allant progressivement de continu et opaque à continu et semi-transparent.

On entend ici par « semi-transparent » le fait de permettre l'observation de ce qui est placé dessous (ou derrière), comme par exemple un fond d'écran ou des informations alphanumériques ou un obstacle O.

D'une manière générale, un aspect (ou rendu) est une représentation graphique qui lors d'un affichage permet de différencier une partie de trajectoire future T d'une autre de ses parties (on notera que deux parties ayant le même aspect ne seront pas différenciables).

Plusieurs combinaisons de types de tracés sont illustrées non limitativement sur les figures 2 à 4.

Ainsi, on a représenté sur la figure 2 un premier exemple d'affichage d'une partie d'une trajectoire future T en présence d'un obstacle O qui l'intersecte au niveau d'une première partie P1. Dans ce premier exemple d'affichage, le premier aspect consiste en un tracé continu et opaque de la deuxième partie P2 de la trajectoire future T, et le deuxième aspect consiste en un tracé continu et semi-transparent de la troisième partie P2 de la trajectoire future T. Par ailleurs, dans ce premier exemple d'affichage, le troisième aspect consiste, à titre d'exemple, en un tracé de transition allant progressivement de continu et opaque à continu et semi-transparent. Il pourrait en effet se présenter sous d'autres formes, et notamment sous une forme continue et opaque ou discontinue et opaque ou continue et semi-transparente ou encore discontinue et semi-transparente.

Sur la figure 3 se trouve représenté un deuxième exemple d'affichage d'une partie d'une trajectoire future T en présence d'un obstacle O qui l'intersecte au niveau d'une première partie P1. Dans ce deuxième exemple d'affichage, le premier aspect consiste en un tracé continu et opaque de la deuxième partie P2 de la trajectoire future T, et le deuxième aspect consiste en un tracé discontinu et semi-transparent de la troisième partie P3 de la trajectoire future T. Par ailleurs, dans ce deuxième exemple d'affichage, le troisième aspect consiste, à titre d'exemple, en un tracé de transition allant progressivement de continu et opaque à discontinu et semi-transparent. Il pourrait en effet se présenter sous d'autres formes, et notamment sous une forme continue et opaque ou discontinue et opaque ou continue et semi-transparente ou encore discontinue et semi-transparente, et plus généralement sous toute forme évoluant progressivement entre les deux aspects (ou rendus) qui sont respectivement associés aux parties adjacentes.

Sur la figure 4 se trouve représenté un troisième exemple d'affichage d'une partie d'une trajectoire future T en présence d'un obstacle O qui l'intersecte au niveau d'une première partie P1. Dans ce troisième exemple d'affichage, le premier aspect consiste en un tracé continu et semi-transparent de la deuxième partie P2 de la trajectoire future T, et le deuxième aspect consiste en un tracé discontinu et semi-transparent de la troisième partie P3 de la trajectoire future T. On notera qu'en variante le deuxième aspect pourrait consister en un tracé discontinu et opaque. Par ailleurs, dans ce troisième exemple d'affichage, le troisième aspect consiste, à titre d'exemple, en un tracé de transition allant progressivement de continu et opaque à discontinu et semi-transparent. Il pourrait en effet se présenter sous d'autres formes, et notamment sous une forme continue et opaque ou discontinue et opaque ou continue et semi-transparente ou encore discontinue et semi-transparente.

Bien entendu d'autres combinaisons d'aspects (ou de rendus) peuvent être envisagées dès lors qu'elles permettent de différencier les trois parties P1 à P3 les unes des autres.

On a schématiquement illustré sur les figures 7 à 10, trois images de synthèse, respectivement dans une vue du dessus et deux vues avant, représentatives d'une même situation dans laquelle la trajectoire future T n'est pas intersectée par un obstacle O détecté. On notera que du fait de l'absence d'intersection de la trajectoire future T, l'intégralité de la trajectoire future T est affichée selon un seul et unique aspect (ici continu et opaque, mais en variante il pourrait être continu et semi-transparent ou discontinu et opaque ou discontinu et semi-transparent).

On notera également que les moyens de traitement MT peuvent être réalisés sous la forme de modules logiciels (ou informatiques), ou bien de circuits électroniques, ou encore d'une combinaison de circuits électroniques et de modules logiciels. Par ailleurs, le dispositif de traitement D peut éventuellement faire partie des moyens de traitement MT' du système d'aide SA.

L'invention offre plusieurs avantages, parmi lesquels :
- une interprétation plus intuitive des images affichées,
- une réduction de la charge mentale du conducteur induite par l'interprétation des informations affichées,
- la conservation sur l'image affichée de la portion de la trajectoire future qui se trouve située au niveau de l'obstacle et en aval de ce dernier et que l'on différencie instantanément de la portion (deuxième partie) qui est située en amont de l'obstacle,
- une accommodation vis-à-vis des imprécisions de mesure des moyens de détection d'obstacles,
- une conservation de la séparation spatiale entre chaque zone de la trajectoire future qui est dépourvue d'obstacle et chaque zone intersectée par un obstacle.

L'invention ne se limite pas aux modes de réalisation de dispositif de traitement, de système d'aide et de véhicule décrits ci-avant, seulement à titre d'exemple, mais elle englobe toutes les variantes que pourra envisager l'homme de l'art dans le cadre des revendications ci-après.

## Revendications

1. Dispositif de traitement (D) pour un système (SA) destiné à aider un conducteur d'un véhicule (V) et agencé pour construire une représentation d'une image de synthèse (IZ) dans au moins une vue choisie d'une partie au moins d'une zone choisie (ZE) entourant ledit véhicule (V), et pour afficher une partie au moins de cette représentation, ledit dispositif (D) comprenant des moyens de traitement (MT) agencés pour déterminer une trajectoire future dudit véhicule (V) au sein de ladite représentation en vue de son affichage sur ladite partie au moins de la représentation, **caractérisé en ce que** lesdits moyens de traitement (MT) sont en outre agencés, en cas d'intersection de ladite trajectoire future par un obstacle (O), pour décomposer cette trajectoire future en une première partie (P1) contenant ledit obstacle (O), une deuxième partie (P2) située entre ledit véhicule (V) et ladite première partie (P1), et une troisième partie (P3) située après ladite première partie (P1), et pour associer des premier et deuxième aspects respectivement auxdites deuxième (P2) et troisième (P3) parties de la trajectoire future, de sorte que ces deuxième (P2) et troisième (P3) parties soient affichées respectivement avec leurs premier et deuxième aspects associés, et **en ce que** lesdits moyens de traitement (MT) sont agencés pour calculer une extension de ladite première partie (P1) de la trajectoire future en fonction au moins d'une précision de détermination de la position dudit obstacle (O) par rapport audit véhicule (V) en fonction au moins d'un angle de braquage et d'une vitesse en cours dudit véhicule (V).

2. Dispositif selon la revendication 1, **caractérisé en ce que** lesdits moyens de traitement (MT) sont agencés pour associer un troisième aspect à ladite première partie (P1) de la trajectoire future, de sorte que cette première partie (P1) de la trajectoire future soit affichée avec ce troisième aspect associé.

3. Dispositif selon l'une des revendications 1 et 2, **caractérisé en ce que** ledit premier aspect consiste en un tracé continu et opaque de ladite deuxième partie (P2) de la trajectoire future, et ledit deuxième aspect consiste en un tracé continu et semi-transparent de ladite troisième partie (P2) de la trajectoire future.

4. Dispositif selon la combinaison des revendications 2 et 3, **caractérisé en ce que** ledit troisième aspect consiste en un tracé de transition allant progressivement de continu et opaque à continu et semi-transparent.

5. Dispositif selon l'une des revendications 1 et 2, **caractérisé en ce que** ledit premier aspect consiste en un tracé continu et opaque de ladite deuxième partie (P2) de la trajectoire future, et ledit deuxième aspect consiste en un tracé discontinu et semi-transparent de ladite troisième partie (P3) de la trajectoire future.

6. Dispositif selon la combinaison des revendications 2 et 5, **caractérisé en ce que** ledit troisième aspect consiste en un tracé de transition allant progressivement de continu et opaque à discontinu et semi-transparent.

7. Dispositif selon l'une des revendications 1 et 2, **caractérisé en ce que** ledit premier aspect consiste en un tracé continu et semi-transparent de ladite deuxième partie (P2) de la trajectoire future, et ledit deuxième aspect consiste en un tracé discontinu de ladite troisième partie (P3) de la trajectoire future.

8. Dispositif selon la revendication 7, **caractérisé en ce que** ledit deuxième aspect consiste en un tracé discontinu et semi-transparent de ladite troisième partie (P3) de la trajectoire future.

9. Dispositif selon la combinaison des revendications 2 et 8, **caractérisé en ce que** ledit troisième aspect consiste en un tracé de transition allant progressivement de continu et semi-transparent à discontinu et semi-transparent.

10. Système d'aide (SA) pour un conducteur de véhicule (V), ledit système (SA) étant agencé pour construire une représentation d'une image de synthèse (IZ) dans au moins une vue choisie d'une partie au moins d'une zone choisie (ZE) entourant ledit véhicule (V), et pour afficher une partie au moins de cette représentation, **caractérisé en ce qu'**il comprend un dispositif de traitement (D) selon l'une des revendications précédentes.

11. Véhicule (V), **caractérisé en ce qu'**il comprend un système d'aide (SA) selon la revendication 10.

## Patentansprüche

1. Vorrichtung zur Verarbeitung (D) für ein System (SA), das dazu bestimmt ist, einen Fahrer eines Fahrzeugs (V) zu unterstützen, und eingerichtet ist, um eine Darstellung eines Synthesebilds (IZ) in mindestens einer ausgewählten Ansicht mindestens eines Teil einer ausgewählten Zone (ZE), die das Fahrzeug (V) umgibt, aufzubauen, und um mindestens einen Teil dieser Darstellung anzuzeigen, wobei die Vorrichtung (D) Verarbeitungsmittel (MT) umfasst, die eingerichtet sind, um einen zukünftigen Weg des Fahrzeugs (V) innerhalb der Darstellung zu bestimmen, um ihn auf mindestens dem Teil der Darstellung anzuzeigen, **dadurch gekennzeichnet, dass** die Verarbeitungsmittel (MT) außerdem eingerichtet sind, um im Fall des Schneidens des zukünftigen Wegs durch ein Hindernis (0), diesen zukünftigen Weg in einen ersten Teil (P1), der das Hindernis (0) enthält, einen zweiten Teil (P2), der zwischen dem Fahrzeug (V) und dem ersten Teil (P1) liegt, und einen dritten Teil (P3), der nach dem ersten Teil (P1) liegt, aufzugliedern, und um erste und zweite Aspekte jeweils dem zweiten (P2) und dritten (P3) Teil des zukünftigen Wegs zuzuordnen, so dass dieser zweite (P2) und dritte (P3) Teil jeweils mit ihren ersten und zweiten zugeordneten Aspekten angezeigt werden, und dass die Verarbeitungsmittel (MT) eingerichtet sind, um eine Erweiterung des ersten Teils (P1) des zukünftigen Wegs in Abhängigkeit von mindestens einer Bestimmungspräzision der Position des Hindernisses (0) in Bezug zu dem Fahrzeug (V) in Abhängigkeit von mindestens einem Einschlagwinkel und einer laufenden Geschwindigkeit des Fahrzeugs (V) zu berechnen.

2. Vorrichtung nach Anspruch 1, **dadurch gekennzeichnet, dass** die Verarbeitungsmittel (MT) eingerichtet sind, um dem ersten Teil (P1) des zukünftigen Wegs einen dritten Aspekt zuzuordnen, so dass dieser erste Teil (P1) des zukünftigen Wegs mit diesem dritten zugeordneten Aspekt angezeigt wird.

3. Vorrichtung nach einem der Ansprüche 1 und 2, **dadurch gekennzeichnet, dass** der erste Aspekt aus einem kontinuierlichen und opaken Strich des zweiten Teils (P2) des zukünftigen Wegs besteht, und das der zweite Aspekt aus einem kontinuierlichen und halb durchsichtigen Strich des dritten Teils (P2) des zukünftigen Wegs besteht.

4. Vorrichtung nach der Kombination der Ansprüche 2 und 3, **dadurch gekennzeichnet, dass** der dritte Aspekt aus einem Übergangsstrich besteht, der allmählich von kontinuierlich und opak zu kontinuierlich und halb durchsichtig übergeht.

5. Vorrichtung nach einem der Ansprüche 1 und 2, **dadurch gekennzeichnet, dass** der erste Aspekt aus einem kontinuierlichen und opaken Strich des zweiten Teils (P2) des zukünftigen Wegs besteht, und dass der zweite Aspekt aus einem unterbrochenen und halb durchsichtigen Strich des dritten Teils (P3) des zukünftigen Wegs besteht.

6. Vorrichtung nach der Kombination der Ansprüche 2 und 5, **dadurch gekennzeichnet, dass** der dritte Aspekt aus einem Übergangsstrich besteht, der allmählich von kontinuierlich und opak zu unterbrochen und halb durchsichtig übergeht.

7. Vorrichtung nach einem der Ansprüche 1 und 2, **dadurch gekennzeichnet, dass** der erste Aspekt aus einem kontinuierlichen und halb durchsichtigen Strich des zweiten Teils (P2) des zukünftigen Wegs besteht, und dass der zweite Aspekt aus einem unterbrochenen Strich des dritten Teils (P3) des zukünftigen Wegs besteht.

8. Vorrichtung nach Anspruch 7, **dadurch gekennzeichnet, dass** der zweite Aspekt aus einem unterbrochenen und halb durchsichtigen Strich des dritten Teils (P3) des zukünftigen Wegs besteht.

9. Vorrichtung nach der Kombination der Ansprüche 2 und 8, **dadurch gekennzeichnet, dass** der dritte Aspekt aus einem Übergangsstrich besteht, der allmählich von kontinuierlich und halb durchsichtig zu unterbrochen und halb durchsichtig übergeht.

10. Hilfssystem (SA) für einen Fahrer eines Fahrzeugs (V), wobei das System (SA) eingerichtet ist, um eine Darstellung eines Synthesebilds (IZ) in mindestens einer ausgewählten Ansicht eines Teils mindestens einer ausgewählten Zone (ZE), die das Fahrzeug (V) umgibt, aufzubauen, und um mindestens einen Teil dieser Darstellung anzuzeigen, **dadurch gekennzeichnet, dass** es eine Verarbeitungsvorrichtung (D) nach einem der vorhergehenden Ansprüche umfasst.

11. Fahrzeug (V), **dadurch gekennzeichnet, dass** es ein Hilfssystem (SA) nach Anspruch 10 umfasst.

## Claims

1. A processing device (D) for a system (SA) intended to assist a driver of a vehicle (V) and designed to build a representation of a synthetic image (IZ) in at least one view chosen from a part at least of a chosen zone (ZE) surrounding said vehicle (V), and to display a part at least of this representation, said device (D) including processing means (MT) designed to determine a future path of said vehicle (V) within said representation with a view to its display on said part at least of the representation, **characterized in that** said processing means (MT) are, furthermore, designed, in the case of intersection of said future path by an obstacle (0), to break this future path down into a first part (P1) containing said obstacle (0), a second part (P2) situated between said vehicle (V) and said first part (P1), and a third part (P3) situated after said first part (P1), and to associate first and second aspects respectively to said second (P2) and third (P3) parts of the future path, so that these second (P2) and third (P3) parts are displayed respectively with their first and second associated aspects, and **in that** said processing means (MT) are designed to calculate an extension of said first part (P1) of the future path as a function at least of a determination precision of the position of said obstacle (0) with respect to said vehicle (V) as a function at least of a steering angle and of a current speed of said vehicle (V).

2. The device according to Claim 1, **characterized in that** said processing means (MT) are designed to associate a third aspect to said first part (P1) of the future path, such that this first part (P1) of the future path is displayed with this third associated aspect.

3. The device according to one of Claims 1 and 2, **characterized in that** said first aspect consists of a continuous and opaque line of said second part (P2) of the future path, and said second aspect consists of a continuous and semi-transparent line of said third part (P2) of the future path.

4. The device according to the combination of Claims 2 and 3, **characterized in that** said third aspect consists in a transition line going progressively from continuous and opaque to continuous and semi-transparent.

5. The device according to one of Claims 1 and 2, **characterized in that** said first aspect consists of a continuous and opaque line of said second part (P2) of the future path, and said second aspect consists of a discontinuous and semi-transparent line of said third part (P3) of the future path.

6. The device according to the combination of Claims 2 and 5, **characterized in that** said third aspect consists of a transition line going progressively from continuous and opaque to discontinuous and semi-transparent.

7. The device according to one of Claims 1 and 2, **characterized in that** said first aspect consists of a continuous and semi-transparent line of said second part (P2) of the future path, and said second aspect consists of a discontinuous line of said third part (P3) of the future path.

8. The device according to Claim 7, **characterized in that** said second aspect consists of a discontinuous and semi-transparent line of said third part (P3) of the future path.

9. The device according to the combination of Claims 2 and 8, **characterized in that** said third aspect consists of a transition line going progressively from continuous and semi-transparent to discontinuous and semi-transparent.

10. An assistance system (SA) for a driver of a vehicle (V), said system (SA) being designed to build a representation of a synthetic image (IZ) in at least one view chosen from a part at least of a chosen zone (ZE) surrounding said vehicle (V), and to display a part at least of this representation, **characterized in that** it includes a processing device (D) according to one of the preceding claims.

11. A vehicle (V), **characterized in that** it includes an assistance system (SA) according to Claim 10.
